# FASCICULE DE BREVET EUROPEEN

(11) **EP 0 459 878 B1**
(45) Date de publication et mention de la délivrance du brevet: **28.12.1994**
(21) Numéro de dépôt: 91401339.6
(22) Date de dépôt: 24.05.1991
(51) Int. Cl.: G01B 21/20, G01B 21/04, G01B 5/20

(54) **Installation de mesure en continu des défauts de forme d'une pièce et procédé de mesure mis en oeuvre dans cette installation**
Vorrichtung zur kontinuierlichen Fehlermessung von Werkstückformen und Messverfahren zur Anwendung der Vorrichtung
Device for continuously measuring the shape defects of a workpiece and measuring method using such device

(30) Priorité: 30.05.1990 FR 9006730
(43) Date de publication de la demande: 04.12.1991
(73) Titulaire: REGIE NATIONALE DES USINES RENAULT S.A., 92109 Boulogne Billancourt Cédex (FR)
(72) Inventeur: Chanoni, Antoine, F-78530 Buc (FR); Hourdel, Alain, F-92500 Rueil Malmaison (FR); Villette, Gérard, F-77177 Brou (FR)
(74) Mandataire: Ernst-Schonberg, Michel

(56) Documents cités:
- FR-A- 2 244 157
- GB-A- 2 166 266
- GB-A- 2 197 478
- GB-A- 2 203 837
- US-A- 4 477 973
- JOURNAL OF PHYSICS E. SCIENTIFIC INSTRUMENTS, vol. 19, no. 7, juillet 1986, pages 495-501, Woodbury, NY, US; W. LOTZE: "Precision length measurement by computer-aided coordinate measurement"
- MACHINE MODERNE, no. 858, septembre 1981, pages 60-67, Paris, FR; Y. CALVEZ: "Intégrer la mesure dans la production"
- WT/WERKSTATTSTECHNIK, vol. 78, no. 3, mars 1988, pages 165-170, Berlin, DE; A. WECKENMANN et al.: "Beurteilung der Genauigkeit von Formprüfgeräten"
- PATENT ABSTRACTS OF JAPAN, vol. 6, no. 252 (P-161)(1130), 10 décembre 1982; & JP-A-57148209

## Description

La présente invention concerne une installation de mesure des défauts de forme d'une pièce, et un procédé de mesure mis en oeuvre dans une telle installation.

Dans le cas d'une surface gauche numérisée, une pièce de carrosserie d'un véhicule automobile par exemple, tout point de cette surface peut être calculé en coordonnées X, Y, Z dans un repère orthonormé. La forme réelle de la pièce, après fabrication, diffère légèrement de la forme théorique. Il est donc nécessaire de connaître les écarts existants entre la forme théorique et la forme réelle, afin de modifier les conditions de fabrication.

Les installations de mesure connues comportent un plan de pose rectifié, appelé ci-après un marbre, sur lequel est installé un présentoir recevant la pièce à mesurer, une machine à mesurer tridimensionnelle et un calculateur. La machine est équipée d'un palpeur à déclenchement monté sur une tête et de trois compteurs quantifiant les déplacements du palpeur selon les trois axes.

Le procédé mis en oeuvre dans de telles installations de mesure connues, consiste à déposer la pièce sur son présentoir, puis à palper cette pièce suivant un nombre de points déterminés préalablement. L'opérateur déplace manuellement le palpeur de point en point, et à chaque point, amène le palpeur en contact sur la pièce. Le palpeur déclenche alors l'acquisition par le calculateur, des trois valeurs lues par les compteurs. Une comparaison des valeurs lues et traitées par le calculateur, avec les valeurs théoriques, quantifie le défaut de forme à un endroit ponctuel.

Ce procédé de mesure est lent, car il faut placer le palpeur à l'aplomb de chaque point prédéterminé, et réaliser un contact avec la pièce afin d'effectuer la saisie des trois coordonnées.

Ce procédé rend l'analyse des défauts imprécise, car le nombre de points mesurés est faible. La multiplication du nombre de points mesurés nécessiterait une préparation (gamme) et une mise en oeuvre longues et coûteuses
L'article de Y. CALVEZ "Intégrer la mesure dans la production" publié dans le n° 858 de la revue "La machine moderne" du mois de septembre 1981 ainsi que la publication GB-A-2.166.266 décrivent des dispositifs de mesure de la forme d'une pièce. Ces dispositifs comprennent un palpeur porté au contact de la pièce lors de chaque mesure en un point de cette dernière. Le palpage de la pièce s'effectue donc de manière discontinue.

La présente invention a pour but de rendre la mesure plus rapide car la préparation est plus succinte et l'opérateur n'a plus à rechercher des points de mesure, il construit une gamme sur la machine lors d'un premier palpage.

La présente invention a également pour but de rendre l'analyse des défauts plus fiable car elle permet d'enregistrer un grand nombre de points qui donne une une évaluation plus précise de la forme réelle.
La présente invention a pour objet une installation de mesure des défauts de forme d'une pièce, comportant un plan de pose (1), un présentoir (2) recevant la pièce (3) à mesurer, une machine de mesure (10) mobile selon trois axes (X,Y,Z) et munie d'un palpeur (17), et un calculateur (20), caractérisée en ce que le palpeur (17), à déplacement linéaire, suit continûment la forme de la pièce (3) au moyen d'un coulisseau (18), les variations enregistrées par le palpeur (17) déterminant un quatrième axe (W), et en ce qu'elle comporte des moyens permettant la saisie instantanée des quatre déplacements de mesure.

Les moyens de saisie sont reliés directement au calculateur.

Le palpeur est un palpeur à déplacement linéaire. Il est monté sur une tête orientable selon deux axes de rotation et l'installation comporte alors un capteur d'initialisation qui permet de situer le palpeur dans l'espace pour une première utilisation ou après chaque démontage.

Le présentoir ou le marbre peuvent comporter un gabarit qui impose une trajectoire de palpage, ce gabarit étant utilisé lorsque la trajectoire de palpage est quelconque.

La présente invention a également pour objet un procédé de
de mesure des défauts de forme d'une pièce consistant :
- à poser la pièce sur un présentoir préalablement orienté,
- à déterminer un pas entre les différents points de mesure,
- à palper la pièce de manière continue,
- à saisir pour chaque point mesuré instantanément et automatiquement sur un calculateur, les quatre déplacements de mesure, le calculateur déterminant alors les trois coordonnées de chaque point mesuré,
- et à comparer ces trois coordonnées avec les trois coordonnées théoriques du point déjà stocké dans le calculateur.

Il est décrit ci-après à titre d'exemple et en référence aux dessins annexés, une installation selon l'invention, ainsi que le procédé mis en oeuvre.
La figure 1 représente une vue générale de l'installation mesurant une pièce, sans utilisation d'un gabarit,
la figure 2 représente, plus en détail, la tête de la machine et son palpeur,
la figure 3 représente une étape particulière de l'initialisation du palpeur,
la figure 4 représente une autre étape dans laquelle un changement de position du palpeur a été réalisé,
la figure 5 est un graphique qui montre les défauts de forme obtenus sur une telle pièce,
la figure 6 montre une autre vue générale de l'installation mesurant une autre pièce avec utilisation d'un gabarit, et
la figure 7 est une vue de dessus de la figure 6.

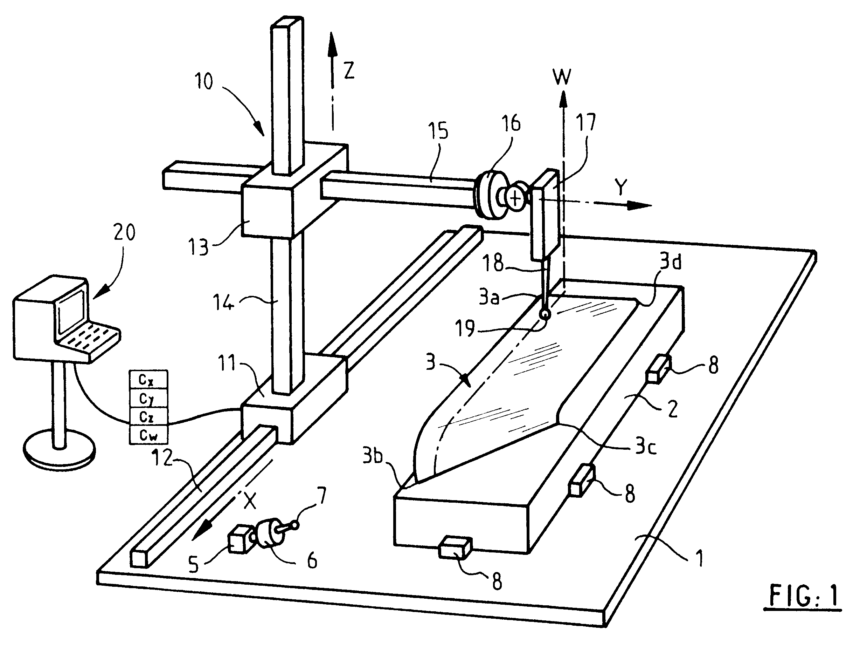

Telle qu'elle est illustrée dans la figure 1, l'installation comporte un plan de pose ou marbre 1, un présentoir 2, un capteur d'initialisation 6, une machine à mesurer 10 et un calculateur 20.

Le marbre reçoit le présentoir 2 en appui contre des cales 8 et, sur ce présentoir, est installée une pièce 3 qui est dans ce cas une vitre de custode d'un véhicule automobile.

Le marbre reçoit également un socle 5, sur lequel est installé le capteur d'initialisation 6, de manière fixe dans l'espace.

La machine à mesurer comporte un premier socle 11 coulissant horizontalement le long d'une règle 12 solidaire du marbre et définissant un axe X, un deuxième socle 13 coulissant le long d'une colonne verticale 14 fixée sur le socle 11 et définissant un axe Z, un bras horizontal 15 coulissant dans le socle 13 et définissant un axe Y, une tête 16 munie d'un palpeur 17 mesurant selon l'axe W, trois règles opto-électroniques (non représentées), et quatre compteurs CX, CY, CZ, CW correspondant respectivement aux axes X, Y, Z et W.

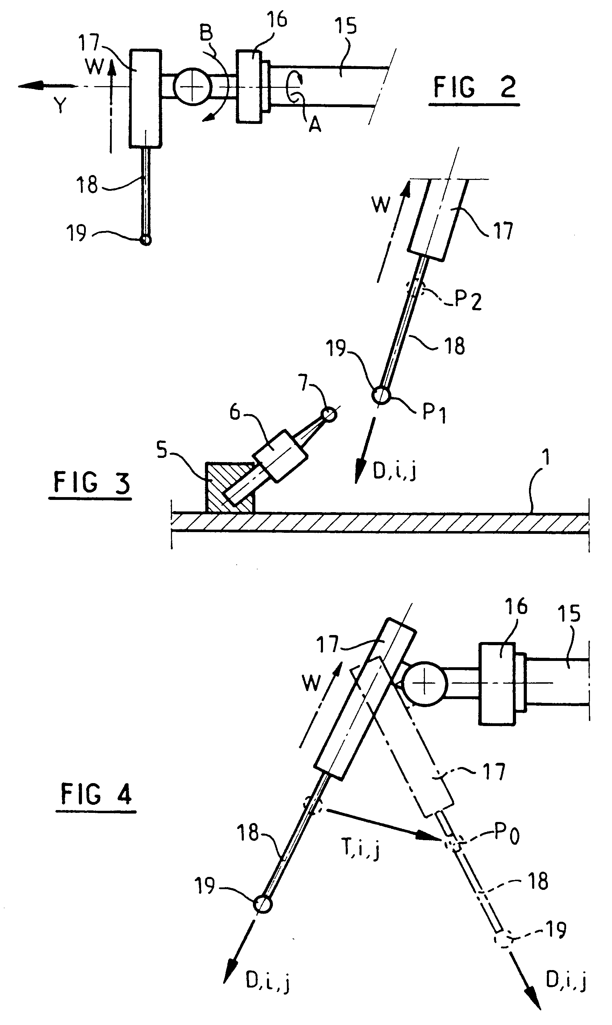

La tête 16 et le palpeur 17 sont mieux visibles sur la figure 2. Cette figure 2 montre que la tête 16 est orientable selon deux axes de rotation possibles, une rotation autour de l'axe Y, selon un angle A, et une rotation autour d'un axe parallèle à l'axe X, selon un angle B. Le palpeur 17 peut ainsi occuper différentes positions dans l'espace, pour être orienté sensiblement perpendiculaire à la pièce à mesurer. Cette tête à deux axes offre une quarantaine de positions, chacune indexable et parfaitement répétable. Le palpeur comporte un coulisseau 18 à débattement linéaire (compris par exemple entre 25 et 100 mm), dont la touche 19 est constamment en appui sur la pièce par l'intermédiaire d'un ressort, ce qui rend ce palpeur apte à la mesure en continu. On appellera ce mode d'utilisation "le mode continu".

La touche 19 est dans ce cas une bille. Cette bille donne une bonne accessibilité quand il s'agit de mesurer des formes concaves, mais elle est sensible à la rugosité de la surface à palper. La touche peut aussi être un galet, car un galet est mieux adapté quand il s'agit de mesurer une surface rugueuse.

Ce palpeur comporte un zéro électrique (voir figure 4 : point po), ce qui permet de l'utiliser comme un palpeur à déclenchement pour effectuer l'opération de dégauchissage de la pièce décrite ci-après. On appellera ce mode d'utilisation "le mode déclenchement".

La mise en place de l'installation, en premier lieu ou après chaque démontage, nécessite une phase d'initialisation de la tête.

L'opération d'initialisation consiste d'abord à déterminer la position du point centre de la bille 19 dans l'espace, (ce qui implique une correction suivant la normale à la forme palpée d'un diamètre d/2), puis à connaître la direction du vecteur Di,j du coulisseau 18, cette direction étant déterminée (voir figure 3), par un palpage de plusieurs points (entre 5 et 50) de la sphère 7 du capteur d'initialisation 6 au moyen de la bille 19, dans les deux positions bloquées du coulisseau (P1 : position basse et P2 : position haute) et par un calcul du vecteur Di,J d'origine P2 et d'extrémité P1. Si l'on doit changer l'orientation du palpeur en cours de palpage, on doit connaître la direction du vecteur translation Ti,j (voir figure 4), entre la position i,j de la figure 3 et la position de référence au zéro électrique (point PO).

La mesure d'une pièce nécessite le dégauchissage du présentoir, ou de la pièce elle-même, pour associer le référentiel machine au référentiel pièce.

L'opération de dégauchissage isostatique ou hyperstatique consiste à palper le présentoir, ou la pièce, à l'aide du palpeur en mode déclenchement.

La mesure selon l'invention s'effectue de la manière suivante.

On positionne la pièce à mesurer sur le présentoir. On palpe la pièce en restant en contact permanent avec celle-ci et le coulisseau se déplace d'une valeur d suivant l'axe W. L'acquisition de données s'effectue selon un pas choisi et chaque pas franchi déclenche la saisie par le calculateur, des quatre valeurs affichées sur les compteurs. Un pas peut être compris entre 0,1 mm et 100 mm. Une distance inférieure à 0,1 mm serait d'une précision inutile et une distance supérieure à 100 mm n'est pas cohérente avec une mesure en mode continu.

Chaque compteur gère un pas, non pas en abscisse curviligne de la trajectoire, mais suivant un des axes machine X, Y, Z.

Il importe que la mémoire tampon du compteur ne déborde pas du fait d'une vitesse de palpage trop rapide. Le calculateur émettra donc un signal sonore tous les n points (n étant fonction du pas choisi et de la taille de la mémoire tampon). Si le signal sonore est discontinu, la vitesse de déplacement est correcte et il n'y a pas de risque de débordement de la mémoire. Mais si le signal sonore devient trop continu, l'opérateur sait alors qu'il doit ralentir la vitesse de déplacement du palpeur.

Les quatre compteurs donnent au calculateur une série de quatre informations composées des coordonnées X, Y, Z de la machine de mesure et de la valeur d du débattement du coulisseau suivant l'axe W. Le calculateur en déduit les trois coordonnées de chaque point mesuré. Comme il connaît les coordonnées théoriques de chaque point mesuré, il visualise sur une table traçante, la courbe théorique et la courbe mesurée qui éventuellement, montre les défauts de manière amplifiée.

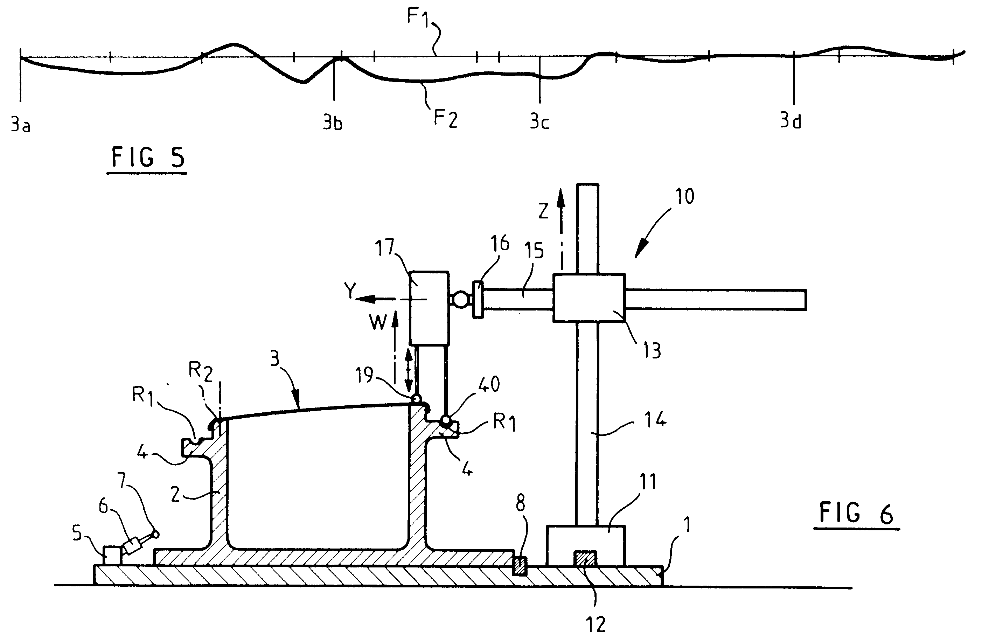

La courbe F1 de la figure 5 est la courbe théorique du pourtour de la pièce 3 et la courbe F2 est la courbe réelle, c'est-à-dire mesurée, avec quatre points caractéristiques 3a, 3b, 3c, 3d de la pièce 3, ces quatre points étant visibles dans la figure 1. Les écarts de dimensionnement sont ainsi directement visibles sur ce graphique.

La figure 6 montre une installation dans laquelle le présentoir reçoit une pièce d'un pourtour complexe qui est dans ce cas une porte d'un véhicule automobile 30. Pour ce genre de pièce 30, il est préférable d'utiliser un gabarit 4 fixé sur le présentoir 2, pour permettre un parcours de palpage parfaitement répétable. Ce gabarit 4 permet de suivre plus facilement le pourtour de la pièce. Un doigt 40 est engagé dans un chemin R1 du gabarit, tandis que la bille 19 du palpeur suit la surface que l'on veut mesurer.

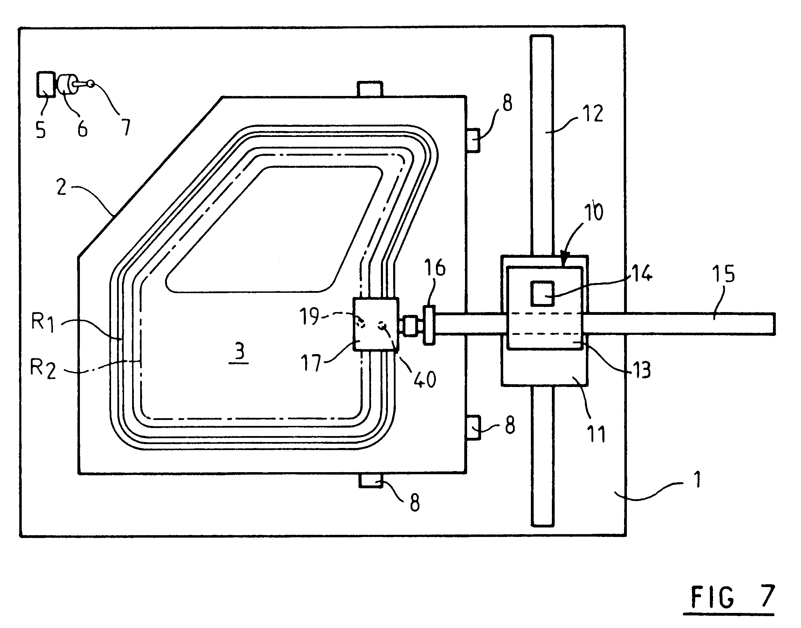

La figure 7 qui est une vue de dessus de la figure 6, montre le chemin R1 suivi par le doigt 40 et le chemin R2 suivi par la bille 19.

Le calculateur permet un traitement statistique. L'organisation de l'archivage permettra une gestion des résultats de mesure. Cette gestion permet de connaître ou d'influencer préventivement, les différents paramètres de fabrication.

Les deux exemples qui viennent d'être décrits concernent la mesure des défauts de forme d'une pièce, mais l'installation et le procédé de l'invention pourraient aussi servir d'aide pour les dessinateurs travaillant en conception assistée par ordinateur (CAO). Dans ce cas, la mesure serait faite en amont de la conception, directement sur une forme en plâtre réalisée par les stylistes. Cette prénumérisation pourrait apporter un gain de temps, de l'ordre de 30%.

L'installation et le procédé de l'invention pourraient également permettre la vérification de la qualité de machines d'usinage à commande numérique, lors de leur réception. En effet, en plaçant quatre ou cinq pièces dans le volume utilisable de la machine à commande numérique, en usinant celles-ci de la même manière, et en les replaçant de manière identique sur la table de la machine à mesurer, on pourraît connaître l'influence des flexions et des vibrations auxquelles sont soumis les bras de la machine à commande numérique.

## Revendications

1. Installation de mesure des défauts de forme d'une pièce, comportant un plan de pose (1), un présentoir (2) recevant la pièce (3) à mesurer, une machine de mesure (10) mobile selon trois axes (X,Y,Z) et munie d'un palpeur (17), et un calculateur (20), caractérisée en ce que le palpeur (17), à déplacement linéaire, suit continûment la forme de la pièce (3) au moyen d'un coulisseau (18), les variations enregistrées par le palpeur (17) déterminant un quatrième axe (W), et en ce qu'elle comporte des moyens permettant la saisie instantanée des quatre déplacements de mesure.

2. Installation de mesure selon la revendication 1, caractérisée en ce que les moyens de saisie sont reliés directement à un calculateur (20).

3. Installation de mesure selon la revendication 2 , caractérisée en ce que le palpeur est monté sur une tête (16) orientable selon deux axes de rotation.

4. Installation de mesure selon la revendication 3 caractérisée en ce qu'elle comporte un capteur d'initialisation (6) qui permet de situer le palpeur (17) dans l'espace pour une première utilisation ou après chaque démontage.

5. Installation selon l'une des revendications 1 à 4 , caractérisée en ce que le présentoir (2) comporte un gabarit (4) qui impose une trajectoire de palpage.

6. Procédé de mesure des défauts de forme d'une pièce, à l'aide d'une installation de mesure selon l'une quelconque des revendications précédentes caractérisé en ce qu'il consiste :
- à poser la pièce (3) sur un présentoir (2) préalablement orienté,
- à déterminer un pas entre les différents points de mesure,
- à palper la pièce de manière continue,
- à saisir pour chaque point mesuré instantanément et automatiquement sur un calculateur, les quatre déplacements de mesure, le calculateur déterminant alors les trois coordonnées de chaque point mesuré,
- et à comparer ces trois coordonnées avec les trois coordonnées théoriques du point déjà stocké dans le calculateur.

7. Utilisation du procédé selon la revendication 5, pour la mise au point des outillages de fabrication par mesure comparative de la forme théorique et de la forme réelle d'une pièce de carrosserie d'un véhicule automobile.

8. Utilisation du procédé selon la revendication 5, pour la prénumérisation, à partir d'une forme maquettée, de la forme définitive de pièces de carrosserie de véhicules automobiles.

9. Utilisation du procédé selon la revendication 5, pour la vérification de la qualité de machines d'usinage à commande numérique, consistant à usiner plusieurs pièces de la même manière, à des endroits différents de la table de la machine d'usinage, et à comparer leurs dimensions sur l'installation de mesure.

## Claims

1. An installation for measuring the shape defects of a component, comprising a positioning table (1), a feed device (2) bearing the component (3) to be measured, a measuring machine (10) moving along three axes (X, Y, Z) and provided with a tracer (17) and a computing machine (20), characterised in that the tracer (17), moving in a linear manner, continuously monitors the shape of the component (3) by means of a slide (18), the variations recorded by the tracer (17) determining a fourth axis (W) and in that it comprises means enabling the instantaneous acquisition of the four measurement movements.

2. A measuring installation as claimed in claim 1, characterised in that the acquisition means are connected directly to a computing machine (20).

3. A measuring installation as claimed in claim 2, characterised in that the tracer is mounted on a head (16) which may be oriented along two axes of rotation.

4. A measuring installation as claimed in claim 3, characterised in that it comprises an initialisation sensor (6) making it possible to locate the tracer (17) in space for a first use or after any dismantling.

5. A measuring installation as claimed in one of claims 1 to 4, characterised in that the feed device (2) comprises a template (4) which imposes a tracing trajectory.

6. A method of measuring the shape defects of a component, using the measuring installation as claimed in and one of the preceding claims, characterised in that it consists in:
- positioning the component (3) on a feed device (2) which has previously been oriented,
- determining a pitch between the various points of measurement,
- continuously tracing the component,
- detecting for each point measured, instantaneously and automatically using a computing machine, the four measurement movements, the computing machine then determining the three coordinates or each point measured,
- comparing these three coordinates with the three theoretical coordinates of the point already stored in the computing machine.

7. Use of the method as claimed in claim 6, for the setting of manufacturing tools by comparative measurement of the theoretical shape and the actual shape of a bodywork component of an automobile vehicle.

8. Use of the method as claimed in claim 6, for the pre-numbering, from a dummy model, of the final shape of bodywork components of automobile vehicles.

9. Use of the method as claimed in claim 6, for verifying the quality of a numerical control machining plant, consisting in machining a plurality of components in the same way, at different locations of the table of the machining plant, and in comparing their dimensions on the measuring installation.

## Patentansprüche

1. Vorrichtung zur Fehlermessung der Form eines Werkstücks, mit einer Aufspannebene (1), einem Aufnahmeteil (2), in das das zu vermessende Werkstück (3) eingesetzt wird, einer Meßanordnung (10), die entlang dreier Achse (x, y, z) beweglich ist und die mit einem Abtaster (17) versehen ist, und mit einem Rechner (20), dadurch gekennzeichnet, daß der Abtaster (17), der linear verschiebbar ist, kontinuierlich der Form des Werkstücks (3) folgt mittels einer Gleitführung (18), wobei die vom Abtaster (17) festgestellten Veränderungen eine vierte Achse (W) festlegen und daß sie eine Anordnung aufweist, die den sofortigen Abgriff der vier Meßverschiebungen ermöglicht.

2. Vorrichtung zur Messung nach Anspruch 1, dadurch gekennzeichnet, daß die Zugriffsanordnung direkt mit dem Rechner (20) verbunden ist.

3. Vorrichtung zur Messung nach Anspruch 2, dadurch gekennzeichnet, daß der Abtaster an einem Kopf (16) angeordnet ist, welcher entlang zweier Drehachsen ausrichtbar ist.

4. Vorrichtung zur Messung nach Anspruch 3, dadurch gekennzeichnet, daß sie einen lnitialisierungsfühler (6) aufweist, welcher es ermöglicht, den Abtaster (17) im Raum für einen ersten Einsatz oder nach jeder Demontage festzulegen.

5. Vorrichtung zur Messung nach Ansprüchen 1 bis 4, dadurch gekennzeichnet, daß das Aufnahmeteil (2) eine Schablone (4) aufweist, welche einen Abtastweg festlegt.

6. Verfahren zur Fehlermessung der Form eines Werkstücks mittels einer Vorrichtung zur Messung nach einem der vorhergehenden Ansprüche, dadurch gekennzeichnet, daß es umfaßt;
- das Einlegen des Werkstückes (3) in ein vorher ausgerichtetes Aufnahmeteil (2),
- das Festlegen eines Schrittes zwischen den verschiedenen Meßpunkten,
- das kontinuierliche Abtasten des Werkstucks.
- das sofortige und automatische Abgreifen der vier Meßverschiebungen für jeden Meßpunkt durch einen Rechner, welcher danach die drei Koordinaten für jeden Meßpunkt festlegt und
- das Vergleichen der drei Koordinaten mit den drei theoretischen Koordinaten des Punktes, welche bereits im Rechner gespeichert sind.

7. Verwendung des Verfahrens nach Anspruch 5 für den Einsatz von Herstellungswerkzeugen mittels Vergleichsmessung der theoretischen Form und der tatsächlichen Form eines Karosserieteils eines Kraftfahrzeugs.

8. Verwendung des Verfahrens nach Anspruch 5 zur Vorbereitung, ausgehend von einem Modell der endgültigen Form von Karosserieteilen von Kraftfahrzeugen.

9. Verwendung des Verfahrens nach Anspruch 5 zur Überprüfung der Qualität von numerisch gesteuerten Werkzeugmaschinen, bestehend aus der gleichartigen Bearbeitung mehrerer Werkstücke an unterschiedlichen Stellen des Schlittens der Werkzeugmaschine und aus dem Vergleich ihrer Abmessungen in der Vorrichtung zur Messung.
